(19) Europäisches Patentamt
European Patent Office
Office européen des brevets

(11) EP 0 639 206 B1

(12) EUROPÄISCHE PATENTSCHRIFT

(45) Veröffentlichungstag und Bekanntmachung des Hinweises auf die Patenterteilung:
**07.02.1996 Patentblatt 1996/06**

(21) Anmeldenummer: **93909912.3**

(22) Anmeldetag: **06.05.1993**

(51) Int Cl.[6]: **C08G 77/38**, C08G 77/50

(86) Internationale Anmeldenummer:
**PCT/EP93/01115**

(87) Internationale Veröffentlichungsnummer:
**WO 93/22369 (11.11.1993 Gazette 1993/27)**

# (54) VINYLOXYGRUPPEN AUFWEISENDE SILOXANCOPOLYMERE, DEREN HERSTELLUNG UND VERWENDUNG

SILOXANE COPOLYMERS HAVING VINYLOXY GROUPS, THEIR PREPARATION AND USE

COPOLYMERES DE SILOXANE COMPORTANT DES GROUPES VINYLOXY, LEUR FABRICATION ET LEUR UTILISATION

(84) Benannte Vertragsstaaten:
**AT BE CH DE ES FR GB IT LI NL**

(30) Priorität: **07.05.1992 DE 4215030**

(43) Veröffentlichungstag der Anmeldung:
**22.02.1995 Patentblatt 1995/08**

(73) Patentinhaber: **WACKER-CHEMIE GMBH**
**D-81737 München (DE)**

(72) Erfinder:
- **HERZIG, Christian, Dr.**
  **D-83373 Taching am See (DE)**
- **RENGSTL, Alfred, Dr.**
  **D-84571 Reischach (DE)**

(56) Entgegenhaltungen:

| | |
|---|---|
| **EP-A- 0 439 777** | **EP-A- 0 439 778** |
| **EP-A- 0 449 050** | **WO-A-91/05756** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 639 206 B1

Printed by Jouve, 75001 PARIS (FR)

## Beschreibung

Die Erfindung betrifft Vinyloxygruppen aufweisende Siloxancopolymere sowie ein Verfahren zu deren Herstellung. Weiterhin betrifft die Erfindung durch Licht vernetzbare Zusammensetzungen auf der Grundlage von Vinyloxygruppen aufweisenden Siloxancopolymeren.

Aus EP-B 105 341 sind organopolysiloxane bekannt, die je Molekül mindestens eine Si-gebundene vinyloxyfunktionelle Gruppe der Formel

$$H_2C{=}CH{-}O{-}G{-}$$

enthalten, wobei G ein Alkylenrest ist oder einen Alkylenrest bedeutet, der durch mindestens einen zweiwertigen Heterorest, wie -o-, zweiwertigen Phenylenrest oder substituierten zweiwertigen Phenylenrest oder Kombinationen solcher Heteroreste, unterbrochen ist. Diese Organopolysiloxane werden erhalten durch Herstellung einer Verbindung mit einer Allyl- und einer Vinyloxygruppe und Anlagerung dieser Verbindung an die SiH-Gruppen der Organopolysiloxane wobei die Hydrosilylierung nur an der Allylgruppe erfolgt. In EP-B 105 341 sind weiterhin durch Licht vernetzbare Zusammensetzungen beschrieben, die die vorstehend genannten Organopolysiloxane enthalten, sowie Oniumsalze, die die kationische Polymerisation dieser Organopolysiloxane katalysieren.

Aus Chemical Abstracts 107,176221q ist zur Herstellung von plastischen Linsen ein Silan mit einer Vinyloxypropylgruppe und mindestens einer Trimethylsiloxygruppe bekannt, das durch Hydrosilylierung von Allylvinylether mit Trimethylsiloxygruppen aufweisendem Silan, wobei die Addition an der Allylgruppe erfolgt, erhalten wird.

In US-A 5,057,549 und CA-A 20 35 396 sind Propenyloxygruppen enthaltende Organopolysiloxane bzw. Propenyloxygruppen enthaltende Siloxancopolymere beschrieben, die in einem zweistufigen Verfahren hergestellt werden durch Anlagerung von Verbindungen mit zwei bzw. mehr als zwei Allyloxygruppen an SiH-Gruppen von Organopolysiloxanen und anschließende Umwandlung der Allyloxygruppen zu den Propenyloxygruppen durch Umlagerung der Doppelbindung.

In der deutschen Patentanmeldung der Anmelderin mit dem Aktenzeichen P 41 23 423.5 werden Siloxancopolymere beschrieben, die durch Umsetzung von Kohlenwasserstoffen mit mehr als zwei endständigen Doppelbindungen, wie 1,2,4-Trivinylcyclohexan, mit Si-gebundene Wasserstoffatome aufweisenden Organopolysiloxanen in Gegenwart von die Hydrosilylierung fördernden Katalysatoren erhalten werden.

Aus US-A 5,145,915 sind Organopolysiloxane mit einer beliebigen Anzahl von substituierten Vinylethergruppen bekannt, die durch Hydrosilylierung, also durch Umsetzung eines SiH-Gruppen aufweisenden Organopolysiloxans mit einem Polyoxyalkylenether beispielsweise der Formel

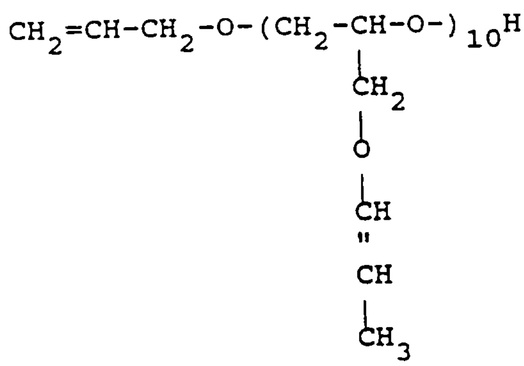
,

wobei die Addition an der Allylgruppe erfolgt, hergestellt werden.

Es bestand die Aufgabe, Vinyloxygruppen aufweisende Siloxancopolymere bereitzustellen, die in einem einfachen Verfahren herstellbar sind, wobei das Verfahren es erlaubt, an einem Siliziumatom mehr als eine Vinyloxygruppe einzuführen und wobei das Verfahren es ermöglicht, auch bei Einsatz von Divinylethern Polyvinyloxy-Polymere zu erhalten. Weiterhin bestand die Aufgabe Vinyloxygruppen aufweisende Siloxancopolymere bereitzustellen, welche bei Einwirkung von Licht, insbesondere von Ultraviolettlicht, unter kationischer Polymerisation besonders rasch vernetzen. Diese Aufgabe wird durch die Erfindung gelöst.

Gegenstand der Erfindung sind Vinyloxygruppen aufweisende Siloxancopolymere enthaltend

(a) Siloxaneinheiten der Formel

$$R_aSi(OR^1)_bO_{\frac{4-(a+b)}{2}} \qquad (I),$$

wobei

R gleiche oder verschiedene, gegebenfalls halogenierte Kohlenwasserstoffreste mit 1 bis 18 Kohlenstoffatom(en) je Rest,
$R^1$ gleiche oder verschiedene Alkylreste mit 1 bis 4 Kohlenstoffatom(en) je Rest, die durch ein Ethersauerstoffatom substituiert sein können, bedeutet,
a 0, 1, 2 oder 3,
b 0, 1, 2 oder 3
und die Summe a+b nicht größer als 3 ist,

(b) je Molekül mindestens eine Einheit ausgewählt aus der Gruppe von Einheiten der Formel

$$GR_cSiO_{\frac{4-(c+1)}{2}} \quad \text{(II)},$$

$$O_{\frac{4-(c+1)}{2}}R_cSi\text{-}G^1\text{-}SiR_cO_{\frac{4-(c+1)}{2}} \quad \text{(III)},$$

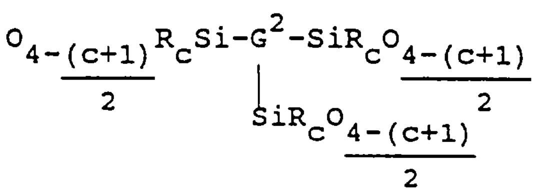
(IV)

und

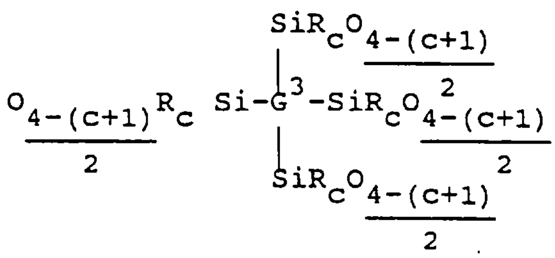
(V),

wobei R die oben dafür angegebene Bedeutung hat, c 0, 1 oder 2 ist,
G einen Rest der Formel

$$-CH_2CH_2OY(OCH{=}CH_2)_{x-1}$$

bedeutet, wobei
Y einen zweiwertigen, dreiwertigen oder vierwertigen Kohlenwasserstoffrest mit 1 bis 20 Kohlenstoffatomen je Rest bedeutet,
der durch Gruppen der Formel

- OH
- $OR^3$ (wobei $R^3$ einen Alkylrest mit 1 bis 6 Kohlenstoffatom(en) je Rest bedeutet)
- $OSiR^4_3$ (wobei $R^4$ einen Methyl-, Ethyl-, Isopropyl-, tert.-Butyl- oder Phenylrest bedeutet)
- 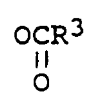
(wobei $R^3$ die oben dafür angegebene Bedeutung hat) oder
- X (wobei X ein Halogenatom bedeutet) substituiert sein kann

oder durch mindestens ein Sauerstoffatom, eine Carboxyl- oder eine Carbonylgruppe unterbrochen sein kann, und

x 2, 3 oder 4 ist,

$G^1$ einen Rest der Formel

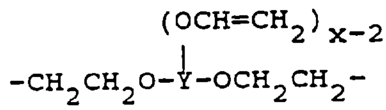,

$G^2$ einen Rest der Formel

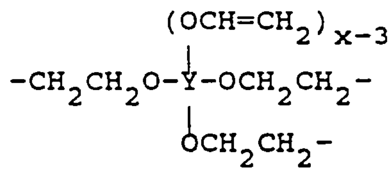

und

$G^3$ einen Rest der Formel

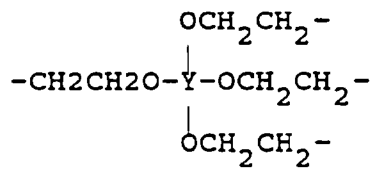,

wobei Y und x die oben dafür angegebene Bedeutung haben, bedeutet

und

(c) je Molekül mindestens eine Einheit der Formel

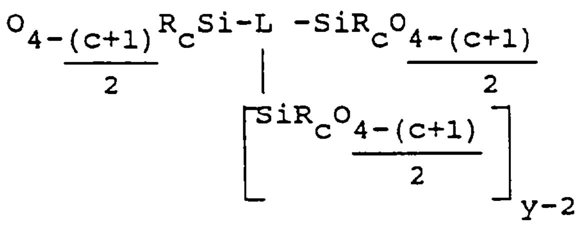 (VI),

wobei R und c die oben dafür angegebene Bedeutung haben und

L einen Rest der Formel

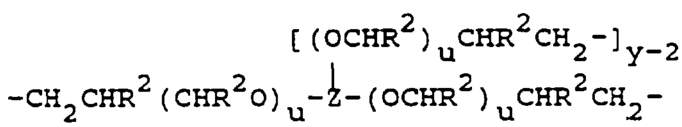

bedeutet, wobei

Z einen zweiwertigen, dreiwertigen, vierwertigen, fünfwertigen oder sechswertigen Kohlenwasserstoffrest mit 2 bis 20 Kohlenstoffatomen je Rest,

der durch Gruppen der Formel

- OH
- $OR^3$ (wobei $R^3$ einen Alkylrest mit 1 bis 6 Kohlenstoffatomen je Rest bedeutet)
- $OSiR^4_3$ (wobei $R^4$ einen Methyl-, Ethyl-, Isopropyl-, tert.-Butyl- oder Phenylrest bedeutet)
- 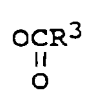
  (wobei $R^3$ die oben dafür angegebene Bedeutung hat) oder
- X (wobei X ein Halogenatom bedeutet) substituiert sein kann

oder durch mindestens ein Sauerstoffatom, eine Carboxyl- oder eine Carbonylgruppe unterbrochen sein kann,

$R^2$ ein Wasserstoffatom oder einen Alkylrest mit 1 bis 6 Kohlenstoffatomen je Rest,
u 0 oder 1 und
y 2, 3, 4, 5 oder 6 bedeutet.

Vorzugsweise enthalten die Vinyloxygruppen aufweisenden Siloxancopolymere Siloxaneinheiten der Formel (I), je Molekül mindestens eine Siloxaneinheit der Formel (II) und je Molekül mindestens eine Einheit der Formel (VI).

Gegenstand der Erfindung ist weiterhin ein Verfahren zur Herstellung der Vinyloxygruppen aufweisenden Siloxancopolymere, dadurch gekennzeichnet, daß eine Vinyloxygruppen aufweisende organische Verbindung (1) der allgemeinen Formel

$$Y(OCH{=}CH_2)_x \quad (1),$$

wobei Y und x die oben dafür angegebene Bedeutung haben, und eine aliphatische Doppelbindungen aufweisende organische Verbindung (2) der Formel

$$Z[(OCHR^2)_uCR^2{=}CH_2]_y \quad (2),$$

wobei Z, $R^2$, u und y die oben dafür angegebene Bedeutung haben,
mit Organopolysiloxan (3) mit durchschnittlich mehr als einem Si-gebundenen Wasserstoffatom je Molekül in Gegenwart von die Anlagerung von Si-gebundenem Wasserstoff an aliphatische Doppelbindung förderndem Katalysator (4) umgesetzt wird, wobei organische Verbindungen (1) und (2) in solchen Mengen eingesetzt wird, daß das Verhältnis der Summe von aliphatischer Doppelbindung in den organischen Verbindungen (1) und (2) zu Si-gebundenem Wasserstoff im Organopolysiloxan (3) größer als 1,0 ist, mit der Maßgabe, daß das Verhältnis von aliphatischer Doppelbindung in organischer Verbindung (2) zu Si-gebundenem Wasserstoff im Organopolysiloxan (3) kleiner als 1,0 ist.

Im Stand der Technik, wie in der eingangs genannten EP-B 105 341, sind weder Vinyloxygruppen aufweisende Siloxancopolymere beschrieben noch war es zu erwarten, daß solche durch Addition (Hydrosilylierung) von SiH-Gruppen an Vinyloxygruppen erhalten werden können, da gemäß der EP-B 105 341 die Einführung einer Vinyloxygruppe in ein Organopolysiloxan nur gelingt durch Hydrosilylierung einer Verbindung, die eine Allylgruppe und eine Vinyloxygruppe enthält, wobei die Addition an der Allylgruppe erfolgt.

Die erfindungsgemäßen, Vinyloxygruppen aufweisenden Organopolysiloxane besitzen vorzugsweise eine Viskosität von 5 bis $5.10^5$ mPa.s bei 25°C, bevorzugt 50 bis 50000 mPa·s bei 25°C.

In den erfindungsgemäßen, Vinyloxygruppen aufweisenden Siloxancopolymeren beträgt der Siloxananteil vorzugsweise 20 bis 90 Gew.-% bezogen auf das Gasamtgewicht der Vinyloxygruppen aufweisenden Siloxancopolymere.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthrylund Phenanthrylrest; Alkarylreste, wie o-, m-, p-Tolylreste; Xylylreste und Ethylphenylreste; und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Beispiele für Alkylreste $R^1$ sind der Methyl-, Ethyl-, n-Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Beispiele für Alkylreste $R^2$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^2$ ein Wasserstoffatom.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest.

Bevorzugt als Vinyloxygruppen aufweisende Siloxancopolymere sind solche, die

(a) Siloxaneinheiten der Formel

$$R_2SiO \quad (I'),$$

(b) je Molekül mindestens zwei Siloxaneinheiten der Formel

$$GR_2SiO_{1/2} \quad (II')$$

und

(c) je Molekül mindestens eine Einheit der Formel

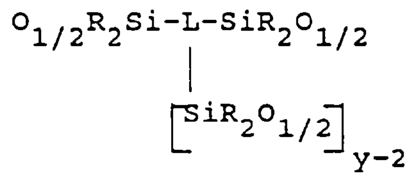

(VI') ,

wobei R, G, $G^1$ und L die oben dafür angegebene Bedeutung haben, enthalten.

Nach dem erfindungsgemäßen Verfahren lassen sind auch bei Einsatz von Divinylethern (1), die leicht zugänglich sind, durch den Einbau von polyfunktionellen En-Verbindungen (2) verzweigte, und damit polyfunktionelle Additionspolymere erhalten.

Beispiele für mehr als eine Vinyloxygruppe aufweisende organische Verbindung (1), die bei dem erfindungsgemäßen Verfahren eingesetzt wird, sind solche der Formel

$$CH_2{=}CH\text{-}O\text{-}CH_2\text{-}CH_2\text{-}O\text{-}CH{=}CH_2$$

$$CH_2{=}CH\text{-}O\text{-}(CH_2)_4\text{-}O\text{-}CH{=}CH_2$$

$$CH_2{=}CH\text{-}O\text{-}(CH_2CH_2O)_3\text{-}CH{=}CH_2$$

$$CH_2{=}CH\text{-}O\text{-}(CH_2CH_2CH_2CH_2O)_n\text{-}CH{=}CH_2 \qquad n=2\text{-}6$$

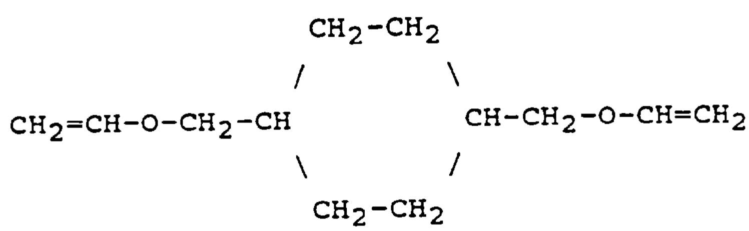

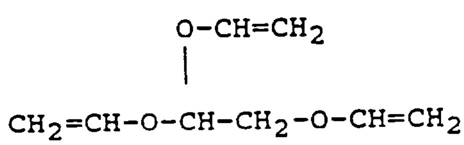

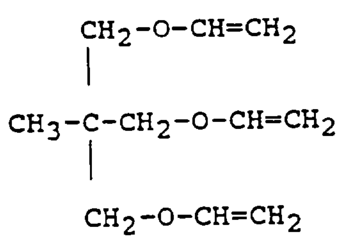

$$CH_3\text{-}C[CH_2\text{-}O(CH_2CH_2O)_m\text{-}CH{=}CH_2]_3 \qquad m=1\text{-}10$$

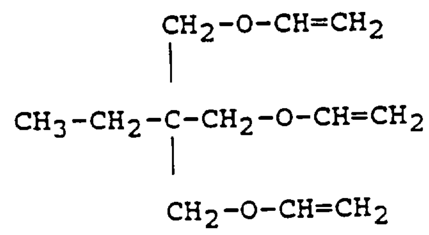

$CH_3-CH_2-C[CH_2-O(CH_2CH_2O)_m-CH=CH_2]_3$ m=1-10

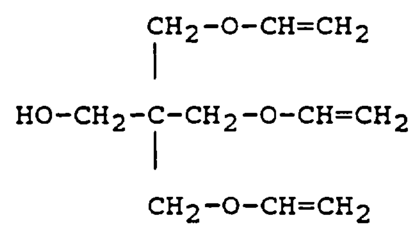

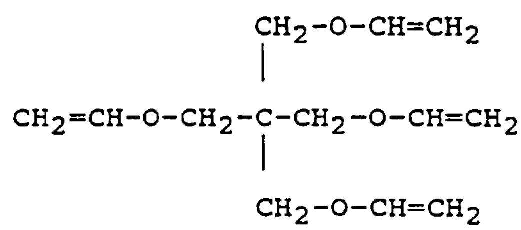

$(CH_2=CH-O)_2CHCH(O-CH=CH_2)_2$

$(CH_2=CH-O)_2CHCH_2CH(O-CH=CH_2)_2$

und

$CH_3C(O-CH=CH_2)_3$

Bevorzugte Beispiele für organische Verbindung (1) sind

$CH_2=CH-O-(CH_2CH_2O)_3-CH=CH_2$

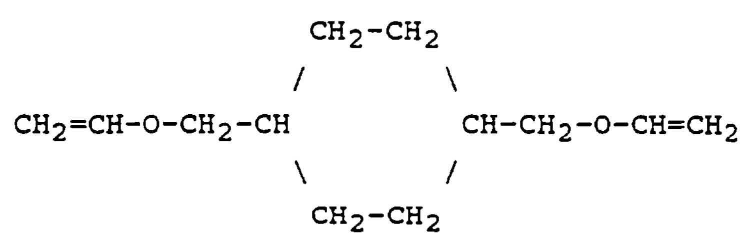

$CH_3-C[CH_2-O-CH=CH_2]_3$

$CH_3-C[CH_2-O(CH_2CH_2O)_m-CH=CH_2]_3$ m=1-10

$CH_3-CH_2-C[CH_2-O-CH=CH_2]_3$

und

$CH_3-CH_2-C[CH_2-O(CH_2CH_2O)_m-CH=CH_2]_3$ m=1-10.

Beispiele für den Rest Y sind daher solche der Formel

$-(CH_2)_2-$

$-(CH_2)_4-$

$-(CH_2CH_2O)_2-CH_2-CH_2$

$-(CH_2CH_2CH_2CH_2O)_{n-1}CH_2CH_2CH_2CH_2-$ n=2-6

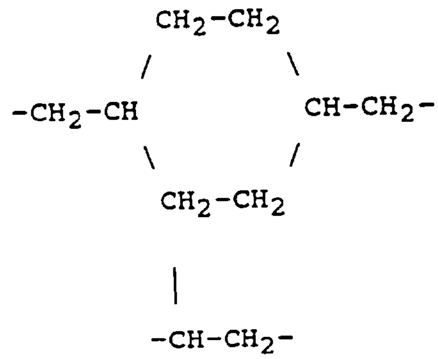

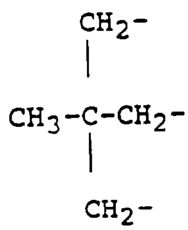

$CH_3-C[CH_2-O(CH_2CH_2O)_{m-1}CH_2CH_2-]_3$ m=1-10

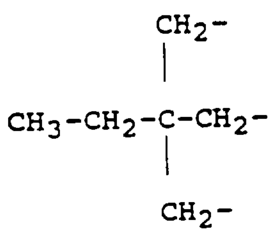

$CH_3-CH_2-C[CH_2-O(CH_2CH_2O)_{m-1}CH_2CH_2-]_3$ m=1-10

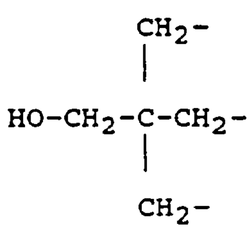

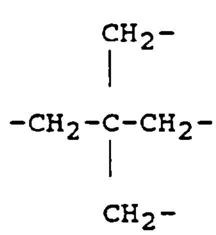

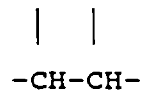

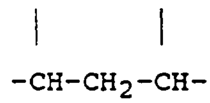

und

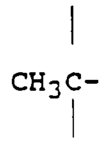

.

Verfahren zur Herstellung von organischer Verbindung (1) sind beispielsweise in der PCT-Anmeldung WO 91/05756 beschrieben. Grundlage für die Herstellung ist die dem Fachmann bekannte Vinylierung nach Reppe, bei der Alkohole katalytisch mit Acetylen umgesetzt werden.

Typische Verunreinigungen technischer Vinylether sind Vinyletheralkohole, die durch unvollständige Vinylierung als "Zwischenstufen" erhalten bleiben, sowie gegebenenfalls deren Folgeprodukte durch Eigencyclisierung, wie beispielsweise:

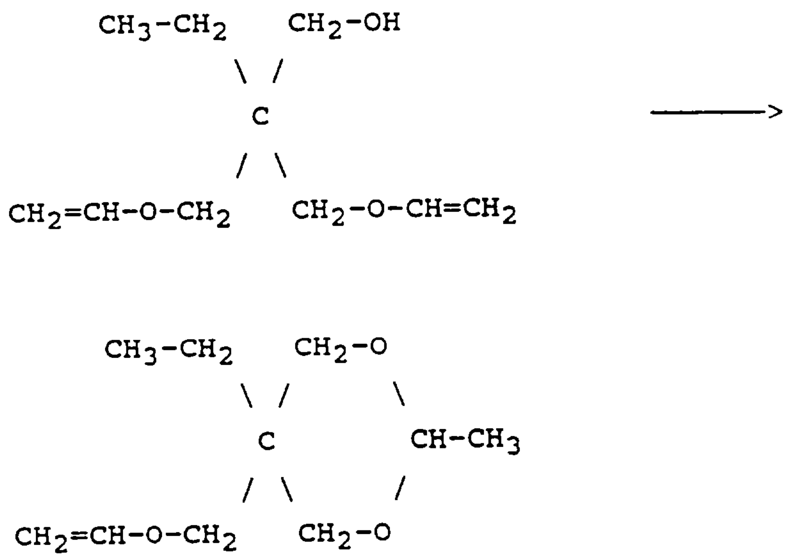

Beispiele für aliphatische Doppelbindungen aufweisende organische Verbindung (2), die bei dem erfindungsgemäßen Verfahren eingesetzt wird, sind

3,5-Dimethyl-4-vinyl-1,6-heptadien,
1,2,4-Trivinylcyclohexan,
1,3,5-Trivinylcyclohexan und
1,2,3,4-Tetravinylcyclobutan,
wobei 1,2,4-Trivinylcyclohexan bevorzugt ist,

sowie solche der Formel

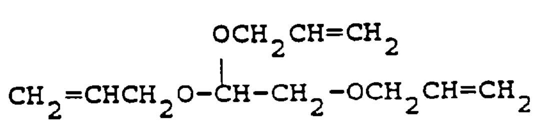

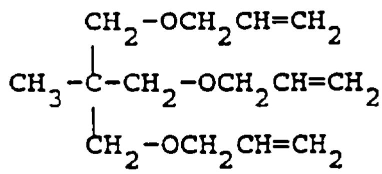

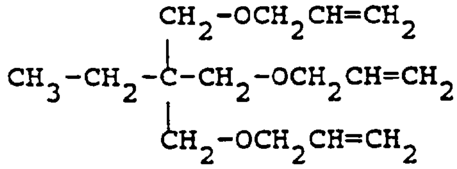

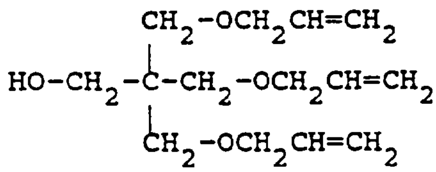

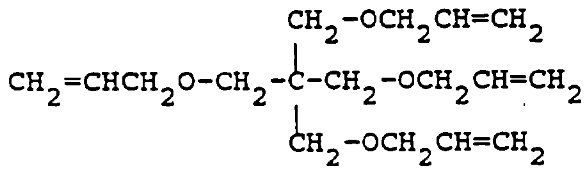

$$(CH_2{=}CHCH_2O)_2CHCH(OCH_2CH{=}CH_2)_2$$

$$(CH_2{=}CHCH_2O)_2CHCH_2CH(OCH_2CH{=}CH_2)_2$$

$$CH_3C(OCH_2CH{=}CH_2)_3$$

$$(CH_2{=}CHCH_2O)CH_2[CH(OCH_2CH{=}CH_2)]_3CH_2(OCH_2CH{=}CH_2)$$

$$(CH_2{=}CHCH_2O)CH_2[CH(OCH_2CH{=}CH_2)]_4CH_2(OCH_2CH{=}CH_2)$$

$$(R^6O\text{-}CH_2\text{-})_{4\text{-}k}C(\text{-}CH_2\text{-}OCH_2CH{=}CH_2)_k$$

($R^6$ bedeutet Wasserstoff oder einen Rest der Formel

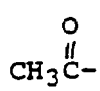

und k ist 3),
wobei die letztgenannte Verbindung und Tetraallyloxyethan bevorzugte Beispiele sind.

Beispiele für den Rest Z, wenn u im Rest L 0 ist, sind daher solche der Formel

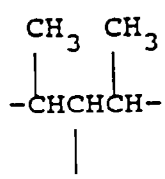

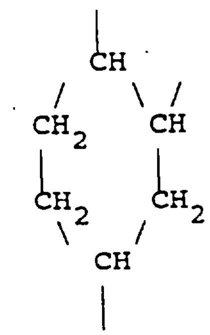

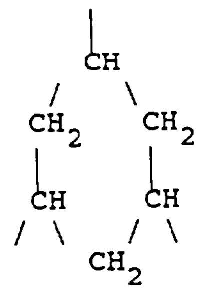

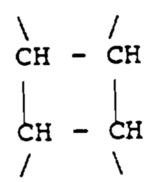

wobei der Rest der Formel

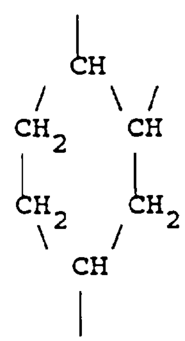

bevorzugt ist.

Beispiele für den Rest Z, wenn u im Rest L 1 ist, sind daher solche der Formel

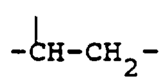

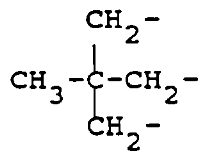

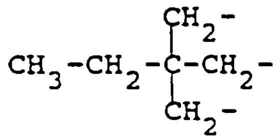

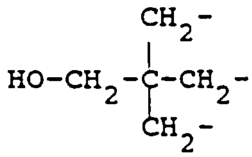

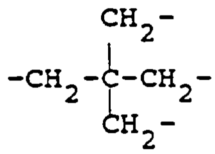

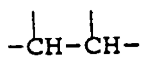

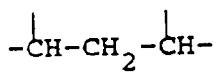

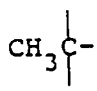

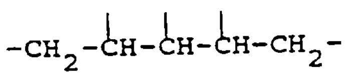

und

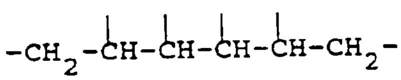
.

Verfahren zur Herstellung von organischer Verbindung (2) sind in EP-B 46 731 (veröffentlicht 3. Oktober 1984, F. Lohse et al., Ciba-Geigy AG) beschrieben.

Die Verbindung der Formel

$$(HOCH_2)_{4-k}C(CH_2OCH_2CH{=}CH_2)_k,$$

wobei k durchschnittlich 2,9 ist, ist beispielsweise bei der Fa. Shell AG käuflich erwerblich und wird als Pentaerythrittriallylether vertrieben. Die Verbindung der Formel

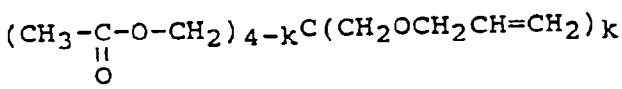

wird durch Umsetzung der vorstehend genannten Verbindung mit Acetanhydrid oder Isopropenylacetat gewonnen.

Es kann eine Art von organischer Verbindung (1) oder Gemische von mindestens zwei verschiedenen Arten von organischer Verbindung (1) bei dem erfindungsgemäßen Verfahren eingesetzt werden.

Ebenfalls kann eine Art von organischer Verbindung (2) oder Gemische von mindestens zwei verschiedenen Arten von organischer Verbindung (2) bei dem erfindungsgemäßen Verfahren eingesetzt werden.

Vorzugsweise werden als Organopolysiloxane (3) mit durchschnittlich mehr als einem Si-gebundenen Wasserstoffatom je Molekül solche der allgemeinen Formel

$$H_eR_fSiO_{\frac{4-(e+f)}{2}} \qquad \text{(VII)},$$

wobei R die oben dafür angegebene Bedeutung hat,

e 0 oder 1, durchnittlich 0,005 bis 1,0,
f 0, 1, 2 oder 3, durchschnittlich 1,0 bis 2,5 und
die Summe e+f nicht größer als 3 ist,
bei dem erfindungsgemäßen Verfahren eingesetzt.

Bevorzugt werden als Organopolysiloxane (3) solche der allgemeinen Formel

$$H_dR_{3-d}SiO(SiR_2O)_o(SiRHO)_pSiR_{3-d}H_d \qquad \text{(VIII)},$$

wobei R die oben dafür angegebene Bedeutung hat,
d gleich oder verschieden und 0 oder 1 ist,
o 0 oder eine ganze Zahl von 1 bis 1000 und
p 0 oder eine ganze Zahl von 1 bis 6 bedeutet,
bei dem erfindungsgemäßen Verfahren eingesetzt.

Besonders bevorzugt enthalten die bei dem erfindungsgemäßen Verfahren eingesetzten Organopolysiloxane (3) durchschnittlich 2 bis 4, insbesondere durchschnittlich 2 bis 3, Si-gebundene Wasserstoffatome je Molekül.

Die Organopolysiloxane (3) besitzen vorzugsweise eine Viskosität von 0,5 bis 20 000 mPa·s bei 25°C, bevorzugt 5 bis 1000 mPa·s bei 25°C.

Bevorzugte Beispiele für organopolysiloxane (3) der Formel (VIII) sind Mischpolymerisate aus Dimethylhydrogensiloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten.

Verfahren zum Herstellen von organopolysiloxanen (3), auch von solchen der bevorzugten Art, sind allgemein bekannt.

Es kann eine Art von Organopolysiloxan (3) oder ein Gemisch von mindestens zwei verschiedenen Arten von Organopolysiloxan (3) bei dem erfindungsgemäßen Verfahren eingesetzt werden.

Organische Verbindung (2) wird bei dem erfindungsgemäßen Verfahren in solchen Mengen eingesetzt, daß aliphatische Doppelbindung in organischer Verbindung (2) zu Si-gebundenem Wasserstoff in Organopolysiloxan (3) im Verhältnis von vorzugsweise 0,10 bis 0,95, bevorzugt 0,30 bis 0,80, vorliegt.

Die SiH-Gruppen liegen im Überschuß zu C=C-Gruppen in organischer Verbindung (2) vor. Die aliphatischen Doppelbindungen in der organischen Verbindung (2) reagieren mit den SiH-Gruppen im Organopolysiloxan (3) weit schneller als die Vinyloxygruppen in der organische Verbindung (1). Die übrig bleibenden SiH-Gruppen werden anschließend zur Einführung der Vinyloxygruppen in das Siloxancopolymer, die durch die Umsetzung mit der Vinyloxygruppen aufweisenden organischen Verbindung (1) erfolgt, benötigt, wobei durch Hydrosilylierung ein Teil der Vinyloxygruppen verbraucht, der Rest für die kationische Vernetzung im Siloxancopolymer zur Verfügung steht.

Organische Verbindung (1) und (2) wird bei dem erfindungsgemäßen Verfahren in solchen Mengen eingesetzt, daß die Summe aus Vinyloxygruppe in organischer Verbindung (1) und aliphatischer Doppelbindung in organischer Verbindung (2) zu Si-gebundenem Wasserstoff in Organopolysiloxan (3) im Verhältnis von vorzugsweise 1,2 bis 20, bevorzugt 1,5 bis 5, vorliegt.

Vorzugsweise werden Vinyloxygruppen aufweisende Siloxancopolymere mit geringer Verbrückung über die Vinyloxygruppen aufweisende organische Verbindung (1) hergestellt.

Die erfindungsgemäßen Siloxancopolymere können auch in einem zweistufigen Verfahren hergestellt werden. Dabei werden in einer 1. Stufe die aliphatische Doppelbindungen aufweisende organische Verbindung (2) mit Organopolysiloxan (3) in Gegenwart von Katalysator (4) umgesetzt und in einer 2. Stufe das in der 1. Stufe erhaltene Siloxancopolymer, das Si-gebundene Wasserstoffatome aufweist, mit Vinyloxygruppen aufweisender organischer Verbindung (1) in Gegenwart von Katalysator (4) umgesetzt. Wichtig ist auch in dem zweistufigen Verfahren, daß in der 1. Stufe das Verhältnis von aliphatischer Doppelbindung in organischer Verbindung (2) zu Si-gebundenem Wasserstoff im Organopolysiloxan (3) immer kleiner als 1,0 ist, vorzugsweise 0,10 bis 0,95, bevorzugt 0,30 bis 0,80 beträgt.

In den erfindungsgemäßen Siloxancopolymeren können geringe Mengen an freien endständigen C=C-Doppelbindungen von der organischen Verbindung (2) vorliegen, die nicht mit den SiH-Gruppen reagiert haben. Diese freien "En"-Gruppen sind nicht störend. Sie können im Fall von Allyloxygruppen in ebenfalls kationisch vernetzbare 1-Propenoxygruppen umgewandelt werden, wie dies in der eingangs erwähnten DE-A 40 02 922 beschrieben ist.

Die Umsetzung von organischer Verbindung (1), wie Triglycoldivinylether, und organischer Verbindung (2), wie Tetraallyloxyethan, mit organopolysiloxan (3), wie $\alpha,\omega$-Dihydrogendimethylpolysiloxan, in Gegenwart von Katalysator (4) läuft nach folgendem Reaktionsschema (idealisiert) ab:

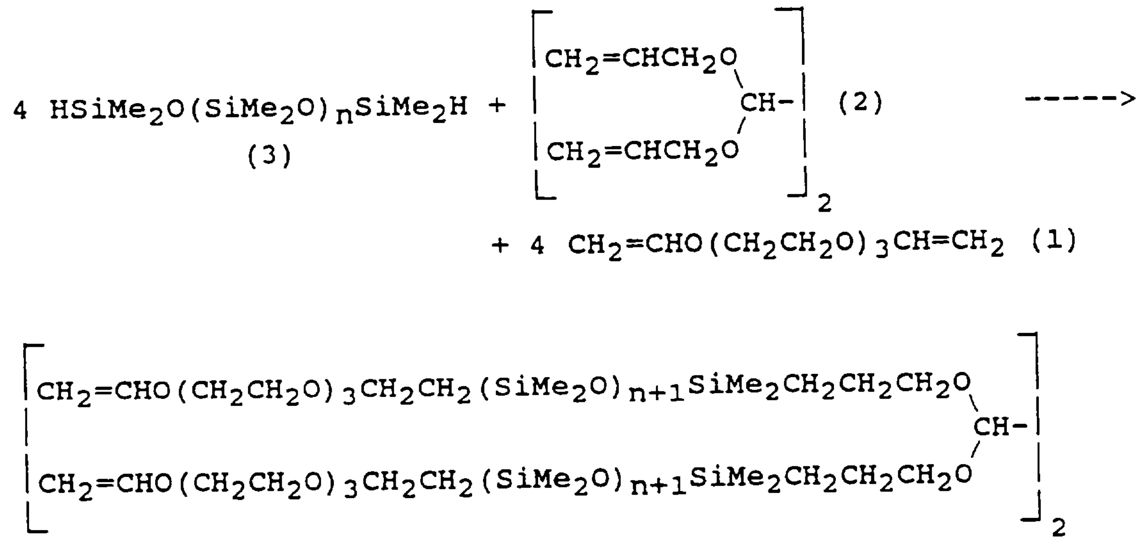

(3) (2) (1)

Durch Überschuß an organischer Verbindung (1) läßt sich die Verbrückung über (1) unterdrücken. In realen Reaktions-systemen erfolgt meist eine weitere Verbrückung von (2) über (3), so daß beispielsweise Einheiten der Formel (VI') vorliegen, sowie Verbrückung von (1) über (3), so daß beispielsweise Einheiten der Formel (III) vorliegen.

Als die Anlagerung von Si-gebundenem Wasserstoff an aliphatische Mehrfachbindung fördernde Katalysatoren (4) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (4) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen und Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, und Ammonium-Platinkomplexe gemäß EP-B 110 370, und Verbindungen und Komplexe von Rhodium, wie die Rhodiumkomplexe gemäß EP-A 476 426.

Der Katalysator (4) wird vorzugsweise in Mengen von 2 bis 1000 Gew.-ppm (Gewichtsteilen je Million Gewichtsteilen), bevorzugt in Mengen von 10 bis 50 Gew.-ppm, jeweils berechnet als elementares Platin und bezogen auf das Gesamtgewicht von organischer Verbindung (1) und (2) und organopolysiloxan (3), eingesetzt.

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 50°C bis 170°C, bevorzugt 80°C bis 150°C, durchgeführt.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Von den nach dem erfindungsgemäßen Verfahren hergestellten Vinyloxygruppen aufweisenden Siloxancopolymeren werden vorzugsweise überschüssige organische Verbindung (1) sowie gegebenenfalls mitverwendetes inertes organisches Lösungsmittel destillativ entfernt. Die überschüssige organische Verbindung (1) kann auch im Siloxancopolymer belassen werden.

Die nach dem erfindungsgemäßen Verfahren hergestellten Vinyloxygruppen aufweisenden Siloxancopolymere werden gegebenenfalls mit Organopolysiloxan (5) äquilibriert.

Als Organopolysiloxane (5) werden vorzugsweise solche ausgewählt aus der Gruppe bestehend aus linearen, endständige Triorganosiloxygruppen aufweisenden Organopolysiloxanen der Formel

$$R_3SiO(SiR_2O)_rSiR_3 ,$$

wobei R die oben dafür angegebene Bedeutung hat und
r 0 oder eine ganze Zahl im Wert von 1 bis 1500 ist,

linearen, endständige Hydroxylgruppen aufweisenden Organopolysiloxanen der Formel

$$HO(SiR_2O)_sH,$$

wobei R die oben dafür angegebene Bedeutung hat und
s eine ganze Zahl im Wert von 1 bis 1500 ist,
cyclischen Organopolysiloxanen der Formel

$$(R_2SiO)_t,$$

wobei R die oben dafür angegebene Bedeutung hat und
t eine ganze Zahl von 3 bis 12 ist,
und Mischpolymerisaten aus Einheiten der Formel

$$R_2SiO \text{ und } RSiO_{3/2},$$

wobei R die oben dafür angegebene Bedeutung hat, eingesetzt.

Das Mengenverhältnis des bei der gegebenenfalls durchgeführten Äquilibrierung eingesetzten Organopolysiloxans (5) und Vinyloxygruppen aufweisenden Siloxancopolymeren wird lediglich durch den gewünschten Anteil der Vinyloxygruppen in den bei der gegebenenfalls durchgeführten Äquilibrierung erzeugten Siloxancopolymeren und durch die gewünschte mittlere Kettenlänge bestimmt.

Bei dem gegebenenfalls durchgeführten Äquilibrieren werden vorzugsweise basische Katalysatoren, welche die Äquilibrierung fördern, eingesetzt. Beispiele für solche Katalysatoren sind Alkalihydroxide, wie Natriumhydroxid und Kaliumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2000 Gew.-ppm, jeweils bezogen auf das Gesamtgewicht von eingesetztem Vinyloxygruppen aufweisendem Siloxancopolymer und eingesetztem Organopolysiloxan (5), verwendet. Die Verwendung saurer Äquilibrierungskatalysatoren ist zwar möglich, jedoch nicht bevorzugt.

Die gegebenenfalls durchgeführte Äquilibrierung wird vorzugsweise bei 100°C bis 150°C und beim Druck der umgebenden Atmosphäre, also etwa bei 1020 hPa (abs.), durchgeführt. Falls erwünscht, können aber auch höhere oder niedrigere Drücke angewendet werden. Das Äquilibrieren wird vorzugsweise in 5 bis 20 Gew.-%, bezogen auf das Gesamtgewicht von jeweils eingesetztem Vinyloxygruppen aufweisendem Siloxancopolymer und eingesetztem organopolysiloxan (5), in mit Wasser nichtmischbarem Lösungsmittel, wie Toluol, durchgeführt. Vor dem Aufarbeiten des bei dem Äquilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die erfindungsgemäßen Vinyloxygruppen aufweisenden Siloxancopolymere sind kationisch vernetzbar, beispielsweise durch Zugabe von Säuren, wie Salzsäure, Schwefelsäure oder p-Toluolsulfonsäure. Die erfindungsgemäßen Vinyloxygruppen aufweisenden Siloxancopolymere werden vorzugsweise in einer durch Licht initiierten, kationischen Polymerisation vernetzt. Als Katalysatoren für die durch Licht initiierte Vernetzung werden vorzugsweise Oniumsalze, wie Diaryljodoniumsalze oder Triarylsulfoniumsalze, verwendet, die aus EP-B 105 341 und der deutschen Anmeldung der Anmelderin mit dem Aktenzeichen P 41 42 327.5 bekannt sind. Beispiele für solche Oniumsalze sind die in EP-B 105 341 beschriebenen Bis-(dodecylphenyl)-iodoniumsalze, wie Bis-(dodecylphenyl)iodoniumhexafluoroantimonat oder Bis-(dodecylphenyl)iodoniumhexafluoroarsenat oder die in der deutschen Anmeldung mit dem Aktenzeichen P 41 42 327.5 beschriebenen Jodoniumsalze der Formel

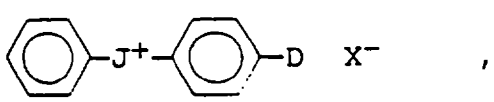

wobei D ein Rest der Formel

$$-O-R^5-SiR^6_3$$

bedeutet, worin

$R^5$ einen zweiwertigen Kohlenwasserstoffrest mit 1 bis 18 Kohlenstoffatomen je Rest, der gegebenfalls durch mindestens ein Sauerstoffatom und/oder ein Schwefelatom und/oder eine Carboxylgruppe unterbrochen ist,
$R^6$ einen einwertigen Kohlenwasserstoffrest mit 1 bis 18 Kohlenstoffatomen je Rest, der gegebenfalls durch mindestens ein Sauerstoffatom unterbrochen ist, und
X- ein Tosylatanion oder ein schwach nukleophiles oder nicht nukleophiles Anion Y- ausgewählt aus der Gruppe von $CF_3CO_2$-, $BF_4$-, $PF_6$-, $AsF_6$-, $SbF_6$-, $ClO_4$-, $HSO_4$-, $CF_3SO_3$- und $C_4F_9SO_3$-bedeutet.

Gegenstand der Erfindung ist daher die Verwendung von Vinyloxygruppen aufweisenden Siloxancopolymeren, vorzugsweise enthaltend Einheiten der Formel (I), (II), gegebenenfalls mindestens eine der Einheiten der Formel (III), (IV) oder (V) und mindestens eine der Einheiten der Formel (VI), bevorzugt enthaltend Einheiten der Formel (I'), (II'), und (VI'), in durch Licht vernetzbare Zusammensetzungen auf Grundlage von vorstehend genannten Siloxancopolymeren.

Vorzugsweise werden die erfindungsgemäßen Vinyloxygruppen aufweisenden Siloxancopolymere durch Ultraviolettlicht vernetzt, wobei solches mit Wellenlängen im Bereich von 200 bis 400 nm bevorzugt ist. Das Ultraviolettlicht kann z.B. in Xenon-, Quecksilbernieder-, Quecksilbermittel- oder Quecksilberhochdrucklampen erzeugt werden. Zur Vernetzung durch Licht ist auch solches mit einer Wellenlänge von 400 bis 600 nm, also sogenanntes "Halogenlicht", geeignet. Die erfindungsgemäßen Vinyloxygruppen aufweisenden Siloxancopolymere können durch Licht im sichtbaren Bereich vernetzt werden, wenn handelsübliche Photosensibilisatoren mitverwendet werden.

Die kationische Polymerisation der erfindungsgemäßen Vinyloxygruppen aufweisenden Siloxancopolymere kann natürlich auch durch dafür übliche Brönsted- oder Lewissäuren eingeleitet werden.

Gegenstand der Erfindung ist schließlich auch die Verwendung der erfindungsgemäßen Vinyloxygruppen aufweisenden Siloxancopolymeren zur Herstellung von durch Licht vernetzbare Überzüge.

Die erfindungsgemäßen Vinyloxygruppen aufweisenden Siloxancopolymere können in strahlungshärtenden Druckfarben verwendet werden.

Beispiele für Oberflächen, auf welche die erfindungsgemäßen Überzüge aufgebracht werden können, sind diejenigen von Papier, Holz, Kork, Kunststoffolien, z.B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern.

Das Auftragen der erfindungsgemäßen Vinyloxygruppen aufweisenden Siloxancopolymeren auf die zu überziehenden Oberflächen kann in beliebiger, für die Herstellung von überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung.

Beispiel 1:

16 g Tetraallyloxyethan und 76 g Triglycoldivinylether werden mit 238 g eines Mischpolymerisats aus Hydrogen-dimethylsiloxan- und Dimethylsiloxaneinheiten mit einer viskosität von 11 $mm^2 \cdot s^{-1}$ bei 25°C, das 0,50 g Si-gebundenen Wasserstoff enthält, vermischt und unter Stickstoffatmosphäre auf ca. 80°C erwärmt. Das Verhältnis der Allylgruppen zu den SiH-Gruppen beträgt 0,5, das Verhältnis der Summe der Allyl- und Vinylgruppen (C=C) zu den SiH-Gruppen, C=C/SiH, beträgt 2,0. Zu der erwärmten Mischung werden 4 mg Platin in Form von Hexachloroplatinsäure, gelöst in Isopropanol, zugegeben, worauf eine Innentemperatur von fast 150°C erreicht wird. Es wird ein Polymer mit einer Viskosität von 220 $mm^2 \cdot s^{-1}$ bei 25°C erhalten; die Menge des Gehalts an abspaltbarem Wasserstoff zeigt einen Umsatz von mehr als 99 %. Im Vakuum wird der nicht verbrauchte Divinylether (ca. 25 g) bei 10°C abgetrennt, wonach das Polymer eine Viskosität von 450 $mm^2 \cdot s^{-1}$ bei 25°C hat und das $^1H$-NMR-Spektrum ein Verhältnis $CH_2$=CH-O/$SiCH_2CH_2O$ von 1,04 zeigt. Freie Allyloxygruppen sind nicht nachweisbar. Das Polymer hat ein Doppelbindungsequivalent (Vinyloxygruppen) von ca. 1200 und ca. 78 Gew.-% Siloxananteil.

Beispiel 2:

Eine Mischung aus 56 g acetyliertem Pentaerytrittriallylether und 121 g Triglycoldivinylether wird mit 6 mg Platin in Form einer Lösung des Platin-1,3-Divinyl-1,1,3,3-tetra-methyldisiloxankomplexes versetzt und unter Stickstoffatmosphäre auf 100°C erwärmt. Zu dieser Lösung, die insgesamt 1,8 Mol C=C-Doppelbindungen enthält, werden 147 g eines $\alpha,\omega$-Dihydrogendimethylpolysiloxans, das 0,68 Gew.-% Si-gebundenen Wasserstoff enthält, getropft und es wird bis zu einem Umsatz von mehr als 98 % ausreagieren gelassen. Überschüssiger Divinylether wird im Vakuum abdestilliert, worauf ein Polymer mit einer Viskosität von 290 $mm^2.s^{-1}$ bei 25°C erhalten wird. Das $^1H$-NMR-Spektrum zeigt ein Verhältnis $CH_2$=CHO/$SiCH_2CH_2O$ von 1,06, wobei keine Allyloxygruppen mehr nachweisbar sind. Das Polymer hat ein Doppelbindungsequiva-lent von ca. 700 und einen Siloxananteil von ca. 52 Gew.-%.

Beispiel 3:

10 g des in Beispiel 2 hergestellten Polymers werden mit 0,1 g [4-[2-(3-Tributylsilylpropyloxy)ethoxy]phenyl]phenyl-jodoniumhexafluoroantimonat (deren Herstellung in der deutschen Anmeldung mit dem Aktenzeichen P 41 42 327.5 beschrieben ist) gemischt und mit einem Glasstab in ca. 4 $\mu$m dünner Schicht auf mit Polyethylen beschichtetem Papier aufgestrichen. Die Aushärtung erfolgt mittels einer Quecksilber-mitteldrucklampe (80 Watt/cm) im Abstand von 10 cm nach einer Belichtungszeit von 0,2 Sekunden.

**Patentansprüche**

1. Vinyloxygruppen aufweisende Siloxancopolymere enthaltend

(a) Siloxaneinheiten der Formel

$$R_aSi(OR^1)_bO_{\frac{4-(a+b)}{2}} \quad (I),$$

wobei

R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauer-stoffatom substituiert sein können, bedeutet,
a 0, 1, 2 oder 3,
b 0, 1, 2 oder 3
und die Summe a+b nicht größer als 3 ist,

(b) je Molekül mindestens eine Einheit ausgewählt aus der Gruppe von Einheiten der Formel

$$GR_cSiO_{\frac{4-(c+1)}{2}} \quad (II),$$

$$O_{\frac{4-(c+1)}{2}}R_cSi\text{-}G^1\text{-}SiR_cO_{\frac{4-(c+1)}{2}} \quad (III),$$

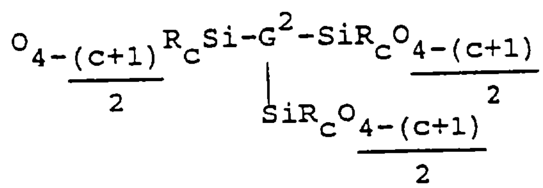

(IV)

und

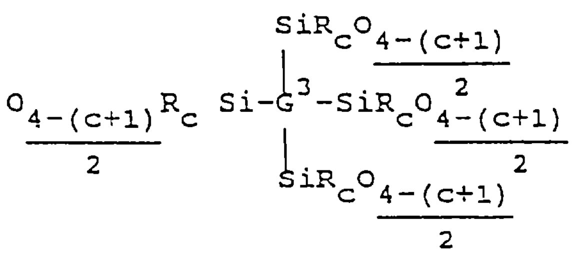

(V),

wobei

R die oben dafür angegebene Bedeutung hat,

c 0, 1 oder 2 ist,

G einen Rest der Formel

$$-CH_2CH_2OY(OCH{=}CH_2)_{x-1}$$

bedeutet, wobei

Y einen zweiwertigen, dreiwertigen oder vierwertigen Kohlenwasserstoffrest mit 1 bis 20 Kohlenstoffatomen je Rest bedeutet,
der durch Gruppen der Formel

- OH

- $OR^3$ (wobei $R^3$ einen Alkylrest mit 1 bis 6 Kohlenstoffatomen je Rest bedeutet)
- $OSiR^4_3$ (wobei $R^4$ einen Methyl-, Ethyl-, Isapropyl-, tert.-Butyl- oder Phenylrest bedeutet)
- 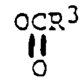

(wobei $R^3$ die oben dafür angegebene Bedeutung hat) oder
- X (wobei X ein Halogenatom bedeutet) substituiert sein kann

oder durch mindestens ein Sauerstaffatom, eine Carboxyl- oder eine Carbonylgruppe unterbrochen sein kann, und

x 2, 3 oder 4 ist,

$G^1$ einen Rest der Formel

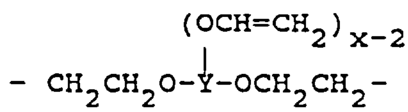

,

$G^2$ einen Rest der Formel

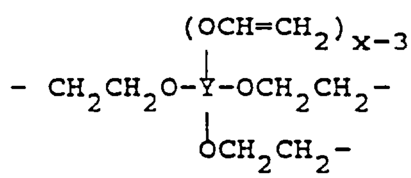

und

$G^3$ einen Rest der Formel

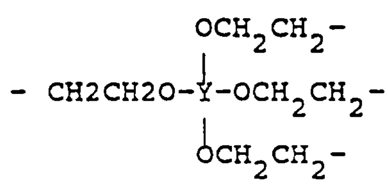

,

wobei Y und x die oben dafür angegebene Bedeutung haben, bedeutet,

und

(c) je Molekül mindestens eine Einheit der Formel

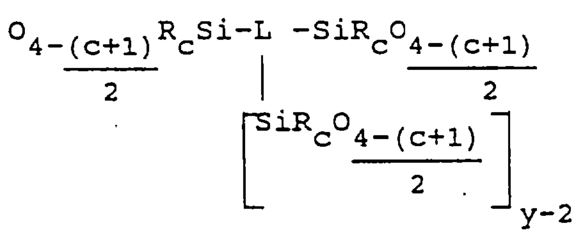

(VI),

wobei R und c die oben dafür angegebene Bedeutung haben und L einen Rest der Formel

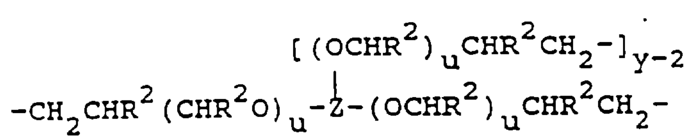

bedeutet, wobei

Z einen zweiwertigen, dreiwertigen, vierwertigen, fünfwertigen oder sechswertigen Kohlenwasserstoffrest mit 2 bis 20 Kohlenstoffatomen je Rest,

der durch Gruppen der Formel

- OH
- $OR^3$ (wobei $R^3$ einen Alkylrest mit 1 bis 6 Kohlenstoffatomen je Rest bedeutet)
- $OSi^4_3$ (wobei $R^4$ einen Methyl-, Ethyl-, Isopropyl-, tert.-Butyl- oder Phenylrest bedeutet)
-

$$\begin{array}{l}OCR^3\\ \;\;\,\|\\ \;\;\,O\end{array}$$

(wobei $R^3$ die oben dafür angegebene Bedeutung hat) oder
- X (wobei X ein Halogenatom bedeutet) substituiert sein kann

oder durch mindestens ein Sauerstoffatom, eine Carboxyl- oder eine Carbonylgruppe unterbrochen sein kann,

$R^2$ ein Wasserstoffatom oder einen Alkylrest mit 1 bis 6 Kohlenstoffatomen je Rest,
u 0 oder 1 und
y 2, 3, 4, 5 oder 6 bedeutet.

**2.** Vinyloxygruppen aufweisende Siloxancopolymere nach Anspruch 1, dadurch gekennzeichnet, daß sie Siloxaneinheiten der Formel (I), je Molekül mindestens eine Siloxaneinheit der Formel (II) und je Molekül mindestens eine Einheit der Formel (VI) enthalten.

**3.** Vinyloxygruppen aufweisende Siloxancopolymere nach Anspruch 1 oder 2, dadurch gekennzeichnet, daß sie enthalten

(a) Siloxaneinheiten der Formel

$$R_2SiO \qquad (I'),$$

(b) je Molekül mindestens zwei Siloxaneinheiten der Formel

$$GR_2SiO_{1/2} \qquad (II')$$

und

(c) je Molekül mindestens eine Einheit der Formel

$$\begin{array}{c}O_{1/2}R_2Si\text{-}L\text{-}SiR_2O_{1/2}\\ |\\ \left[SiR_2O_{1/2}\right]_{y-2}\end{array} \qquad (VI'),$$

wobei R, G, L und y die in Anspruch 1 angegebenen Bedeutungen haben.

**4.** Verfahren zur Herstellung der Vinyloxygruppen aufweisenden Siloxancopolymere, dadurch gekennzeichnet, daß eine Vinyloxygruppen aufweisende organische Verbindung (1) der allgemeinen Formel

$$Y(OCH{=}CH_2)_x \qquad (1),$$

wobei Y und x die in Anspruch 1 angegebenen Bedeutungen haben,
und eine aliphatische Doppelbindungen aufweisende organische Verbindung (2) der Formel

$$Z[(OCHR^2)_uCR^2{=}CH_2]_y \qquad (2),$$

wobei Z, u und y die in Anspruch 1 angegebenen Bedeutungen haben, mit Organopolysiloxan (3) mit durchschnittlich mehr als einem Si-gebundenen Wasserstoffatom je Molekül in Gegenwart von die Anlagerung von Si-gebundenem Wasserstoff an aliphatische Doppelbindung förderndem Katalysator (4) umgesetzt wird, wobei organische Verbindung (1) und (2) in solchen Mengen eingesetzt wird, daß das Verhältnis der Summe von aliphatischer Doppelbindung in den organischen Verbindungen (1) und (2) zu Si-gebundenem Wasserstoff im Organopolysiloxan (3) größer als

1,0 ist, mit der Maßgabe, daß das Verhältnis von aliphatischer Doppelbindung in organischer Verbindung (2) zu Si-gebundenem Wasserstoff im organopolysiloxan (3) kleiner als 1,0 ist.

**5.** Verfahren nach Anspruch 4, dadurch gekennzeichnet, daß als organische Verbindung (1)

$$CH_2=CH-O-(CH_2CH_2O)_3-CH=CH_2$$

verwendet wird.

**6.** Verfahren nach Anspruch 4, dadurch gekennzeichnet, daß als organische Verbindung (2)

$$(CH_2=CHCH_2O)_2CHCH(OCH_2CH=CH_2)_2$$

verwendet wird.

**7.** Verfahren nach Anspruch 4, dadurch gekennzeichnet, daß als Organopolysiloxan (3) mit durchschnittlich mehr als einem Si-gebundenen Wasserstoffatom je Molekül solches der allgemeinen Formel

$$H_dR_{3-d}SiO(SiR_2O)_o(SiRHO)_pSiR_{3-d}H_d \qquad (VIII),$$

wobei R gleiche oder verschiedene, gegebenenfalls halogenierte Kohlenwasserstoffreste mit 1 bis 18 Kohlen-stoffatom(en) je Rest,

d gleich oder verschieden und 0 oder 1 ist,
o 0 oder eine ganze Zahl von 1 bis 1000 und
p 0 oder eine ganze Zahl von 1 bis 6 bedeutet, verwendet wird.

**8.** Verfahren nach einem der Ansprüche 4 bis 7, dadurch gekennzeichnet, daß das so erhaltene Vinyloxygruppen aufweisende Siloxancopolymer mit organopolysiloxan (5) ausgewählt aus linearen, endständige Triorganosiloxygruppen aufweisenden Organopolysiloxanen, linearen, endständige Hydroxylgruppen aufweisenden Organopolysiloxanen, cyclischen Organopoly-siloxanen und Mischpolymerisaten aus Diorganosiloxan-und Monoorganosiloxaneinheiten äquilibriert wird.

**9.** Verwendung der Vinyloxygruppen aufweisenden Siloxancopolymere nach Anspruch 1, 2 oder 3 in durch Licht vernetzbaren Zusammensetzungen auf Grundlage von vorstehend genannten Siloxancopolymeren.

**10.** Verwendung der Vinyloxygruppen aufweisenden Siloxancopolymere nach Anspruch 1, 2 oder 3 zur Herstellung von durch Licht vernetzbaren Überzügen.

## Claims

**1.** Siloxane copolymers containing vinyloxy groups and comprising

(a) siloxane units of the formula

$$R_aSi(OR^1)_bO_{\frac{4-(a+b)}{2}} \qquad (I)$$

wherein R denotes identical or different, optionally halogenated hydrocarbon radicals having 1 to 18 carbon atoms per radical,

$R^1$ denotes identical or different alkyl radicals having 1 to 4 carbon atoms per radical, which can be substituted by an ether oxygen atom,
a is 0, 1, 2 or 3,
b is 0, 1, 2 or 3
and the sum of a+b is not greater than 3,

(b) at least one unit per molecule chosen from the group comprising units of the formula

$$GR_cSiO_{\frac{4-(c+1)}{2}} \qquad (II)$$

$$O_{\frac{4-(c+1)}{2}}R_cSi\text{-}G^1\text{-}SiR_cO_{\frac{4-(c+1)}{2}} \qquad (III)$$

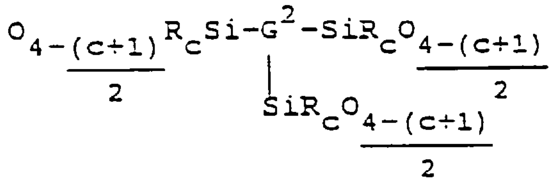

(IV)

and

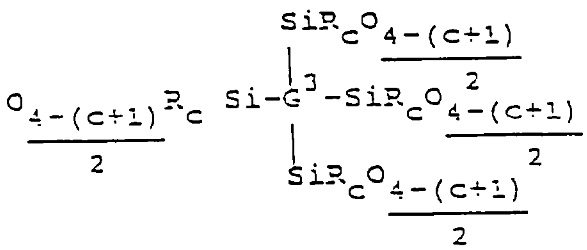

(V)

wherein R has the meaning given above for this radical,

c is 0, 1 or 2,
G denotes a radical of the formula

$$-CH_2CH_2OY(OCH{=}CH_2)_{x-1}$$

wherein
Y denotes a divalent, trivalent or tetravalent hydrocarbon radical having 1 to 20 carbon atoms per radical, which can be substituted by groups of the formula

- OH
- $OR^3$ (wherein $R^3$ denotes an alkyl radical having 1 to 6 carbon atoms per radical)
- $OSiR^4_3$ (wherein $R^4$ denotes a methyl, ethyl, isopropyl, tert-butyl or phenyl radical)
- 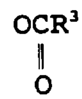

(wherein $R^3$ has the meaning given above for this radical) or
- X (wherein X denotes a halogen atom) or can be interrupted by at least one oxygen atom, one carboxyl or one carbonyl group, and

x is 2, 3 or 4,
$G^1$ denotes a radical of the formula

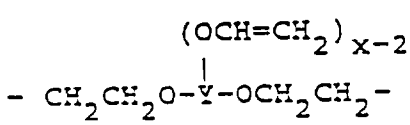

,

$G^2$ denotes a radical of the formula

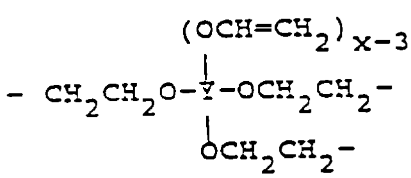

and
$G^3$ denotes a radical of the formula

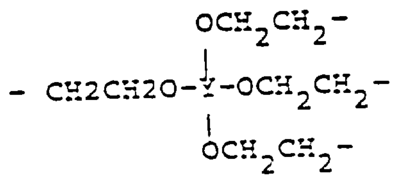

wherein Y and x have the meaning given above for these symbols,

and
(c) at least one unit per molecule of the formula

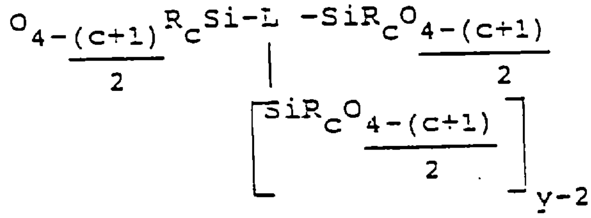
(VI)

wherein R and c have the meaning given above for these symbols and

L denotes a radical of the formula

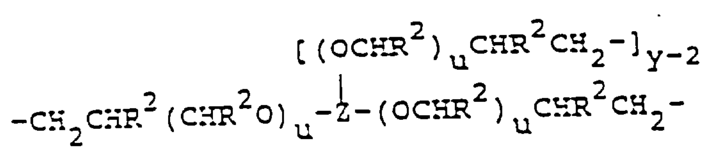

wherein
Z is a divalent, trivalent, tetravalent, pentavalent or hexavalent hydrocarbon radical having 2 to 20 carbon atoms per radical, which can be substituted by groups of the formula

- OH
- $OR^3$ (wherein $R^3$ denotes an alkyl radical having 1 to 6 carbon atoms per radical)
- $OSiR^4_3$ (wherein $R^4$ denotes a methyl, ethyl, isopropyl, tert-butyl or phenyl radical)
- 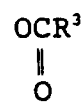
  (wherein $R^3$ has the meaning given above for this radical) or
- X (wherein X denotes a halogen atom) or can be interrupted by at least one oxygen atom, one carboxyl or one carbonyl group,

$R^2$ denotes a hydrogen atom or an alkyl radical having 1 to 6 carbon atoms per radical,
u denotes 0 or 1 and
y denotes 2, 3, 4, 5 or 6.

**2.** Siloxane copolymers containing vinyloxy groups, according to Claim 1, characterised in that the siloxane units of the formula (I) contain, per molecule, at least one siloxane unit of the formula (II) and, per molecule, at least one unit of the formula (VI).

**3.** Siloxane copolymers containing vinyloxy groups, according to Claim 1 or 2, characterised in that they comprise

(a) siloxane units of the formula

$$R_2SiO \quad (I'),$$

(b) per molecule, at least two siloxane units of the formula

$$GR_2SiO_{1/2} \quad (II')$$

and
(c) per molecule, at least one unit of the formula

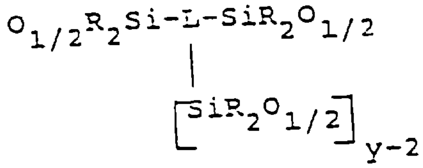

(VI')

wherein R, G, L and y have the meanings given in Claim 1.

**4.** Process for the preparation of the siloxane copolymers containing vinyloxy groups, characterised in that an organic compound (1) containing vinyloxy groups, of the general formula

$$Y(OCH{=}CH_2)_x \quad (1)$$

wherein Y and x have the meanings given in Claim 1, and an organic compound (2) containing aliphatic double bonds, of the formula

$$Z[(OCHR^2)_uCR^2{=}CH_2]_y \quad (2)$$

wherein Z, u and y have the meanings given in Claim 1,
is [sic] reacted with an organopolysiloxane (3) having on average more than one Si-bonded hydrogen atom per molecule, in the presence of a catalyst (4) which promotes the addition of Si-bonded hydrogen onto an aliphatic double bond, the organic compound [sic] (1) and (2) being employed in amounts such that the ratio of the sum of aliphatic double bond in the organic compounds (1) and (2) to Si-bonded hydrogen in the organopolysiloxane (3) is greater than 1.0, with the proviso that the ratio of aliphatic double bond in the organic compound (2) to Si-bonded hydrogen in the organopolysiloxane (3) is less than 1.0.

**5.** Process according to Claim 4, characterised in that

$$CH_2{=}CH\text{-}O\text{-}(CH_2CH_2O)_3\text{-}CH{=}CH_2$$

is used as the organic compound (1).

**6.** Process according to Claim 4, characterised in that

$$(CH_2{=}CHCH_2O)_2CHCH(OCH_2CH{=}CH_2)_2$$

is used as the organic compound (2).

**7.** Process according to Claim 4, characterised in that the organopolysiloxane (3) having on average more than one Si-bonded hydrogen atom per molecule which is used is one of the general formula

$$H_dR_{3-d}SiO(SiR_2O)_o(SiRHO)_pSiR_{3-d}H_d \quad (VIII)$$

wherein R denotes identical or different, optionally halogenated hydrocarbon radicals with 1 to 18 carbon atom(s) per radical,

d is identical or different and is 0 or 1,
o denotes 0 or an integer from 1 to 1000 and
p denotes 0 or an integer from 1 to 6.

**8.** Process according to one of Claims 4 to 7, characterised in that the resulting siloxane copolymer containing vinyloxy groups is equilibrated with an organopolysiloxane (5) chosen from linear organopolysiloxanes containing terminal triorganosiloxy groups, linear organopolysiloxanes containing terminal hydroxyl groups, cyclic organopolysiloxanes and copolymers of diorganosiloxane and monoorganosiloxane units.

**9.** Use of the siloxane copolymers containing vinyloxy groups according to Claim 1, 2 or 3 in compositions which can be crosslinked by light and are based on the abovementioned siloxane copolymers.

**10.** Use of the siloxane copolymers containing vinyloxy groups according to Claim 1, 2 or 3 for the production of coatings which can be crosslinked by light.

**Revendications**

**1.** Copolymères de siloxane comportant des groupes vinyloxy, contenant :

(a) des unités siloxane de formule

$$R_aSi(OR^1)_bO_{\frac{4-(a+b)}{2}} \quad \text{(I),}$$

où

R représente des radicaux hydrocarbures identiques ou différents, facultativement halogénés, avec 1 à 18 atomes de carbone par radical,
$R^1$ représente des radicaux alcoyle identiques ou différents, avec 1 à 4 atomes de carbones par radical, qui peuvent être substitués par un atome d'oxygène de type éther
a est 0, 1, 2 ou 3,
b est 0, 1, 2 ou 3
et la somme a+b n'est pas supérieure à 3,

(b) par molécule, au moins une unité choisie dans le groupe d'unités de formule

$$GR_cSiO_{\frac{4-(c+1)}{2}} \quad \text{(II),}$$

$$O_{\frac{4-(c+1)}{2}}R_cSi\text{-}G^1\text{-}SiR_cO_{\frac{4-(c+1)}{2}} \quad \text{(III),}$$

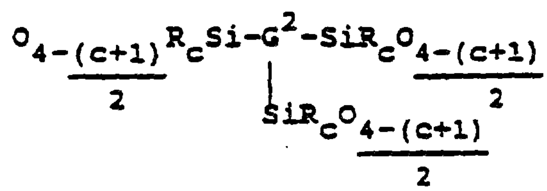

(IV)

et

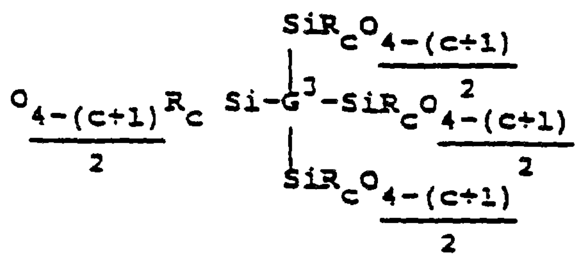

(V),

où

R a la signification donnée précédemment,
c est 0, 1 ou 2,
G représente un radical de formule

$$-CH_2CH_2OY(OCH=CH_2)_{x-1}$$

où
Y représente un radical hydrocarbure bivalent, trivalent ou tétravalent avec 1 à 20 atomes de carbone par

radical, qui peut être substitué par des groupes de formule

- OH
- $OR^3$ (où $R^3$ représente un radical alcoyle de 1 à 6 atomes de carbone par radical)
- $OSiR^4{}_3$ (où $R^4$ représente un radical méthyle, éthyle, isopropyle, t-butyle ou phényle)

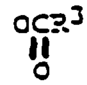

- (où $R^3$ a la signification donnée précédemment) ou
- X (où X représente un atome d'halogène) ou peut être interrompu par au moins un atome d'oxygène, un groupe carboxyle ou carbonyle, et

x est 2, 3 ou 4,
$G^1$ représente un radical de formule

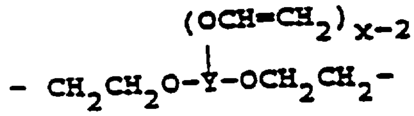 ,

$G^2$ représente un radical de formule

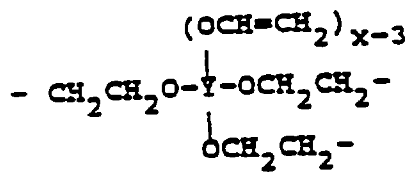

et
représente un radical de formule

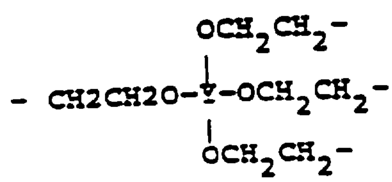 ,

où
Y et x ont les significations données précédemment, et

(c) par molécule, au moins une unité de formule

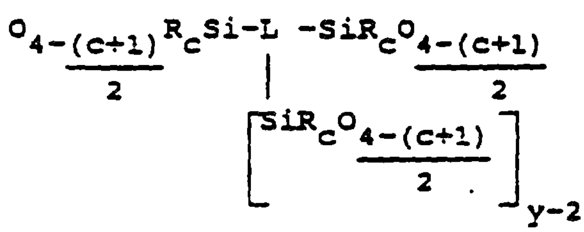 (VI),

où
R et c ont les significations données précédemment, et
L représente un radical de formule

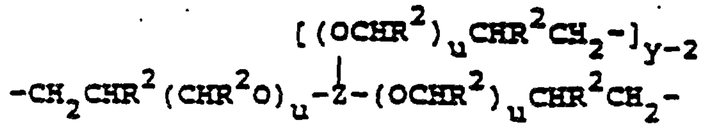

où

Z représente un radical hydrocarbure bivalent, trivalent, tétravalent, pentavalent ou sextavalent avec 2 à 20 atomes de carbone par radical, qui peut être substitué par des groupes de formule

- OH
- $OR^3$ (où $R^3$ représente un radical alcoyle de 1 à 6 atomes de carbone par radical)
- $OSiR^4{}_3$ (où $R^4$ représente un radical méthyle, éthyle, isopropyle, t-butyle ou phényle)
- 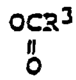

  (où $R^3$ a la signification donnée précédemment), ou
- x (où x représente un atome d'halogène) ou qui peut être interrompu par au moins un atome d'oxygène, un groupe carboxyle ou carbonyle,

$R^2$ représente un atome d'hydrogène ou un radical alcoyle avec 1 à 6 atomes de carbone par radical,
u représente 0 ou 1 et
y représente 2, 3, 4, 5 ou 6.

2. Copolymères de siloxane comportant des groupes vinyloxy suivant la revendication 1, caractérisés en ce qu'ils contiennent des unités siloxane de formule (I), par molécule au moins une unité siloxane de formule (II), et par molécule au moins une unité de formule (VI).

3. Copolymères de siloxane comportant des groupes vinyloxy suivant la revendication 1 ou 2, caractérisés en ce qu'ils contiennent :

(a) des unités siloxane de formule

$$R_2SiO \quad (I'),$$

(b) par molécule, au moins deux unités siloxane de formule

$$GR_2SiO_{1/2} \quad (II')$$

et
(c) par molécule, au moins une unité de formule :

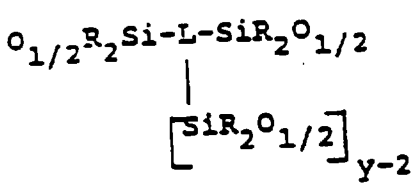

(VI') ,

où R, G, L et y ont les significations données à la revendication 1.

4. Procédé de préparation de copolymére de siloxane comportant des groupes vinyloxy, caractérisé en ce qu'un composé organique (1) comportant des groupes vinyloxy, de formule générale

$$Y(OCH{=}CH_2)_x \quad (1),$$

où Y et x ont les significations données à la revendication 1,
et un composé organique (2) comportant une double liaison aliphatique, de formule

$$Z[(OCHR^2)_uCR^2{=}CH_2]_y \quad (2),$$

où Z, u et y ont les significations données à la revendication 1, sont mis à réagir avec un organopolysiloxane (3) avec, en moyenne, plus d'un atome d'hydrogène à liaison Si par molécule, en présence d'un catalyseur (4) activant l'addition d'hydrogène à liaison Si sur une double liaison aliphatique, où les composés organiques (1) et (2) sont introduits en des quantités telles que le rapport de la somme des doubles liaisons aliphatiques dans les composés organiques (1) et (2) aux atomes d'hydrogène à liaison Si dans l'organopolyailoxane (3) est supérieur à 1,0, à la condition que le rapport des doubles liaisons aliphatiques dans le composé organique (2) aux atomes d'hydrogène à liaison Si dans l'organopolysiloxane (3) soit inférieur à 1,0.

**5.** Procédé suivant la revendication 4, caractérisé en ce que l'on utilise

$$CH_2=CH\text{-}O\text{-}(CH_2CH_2O)_3\text{-}CH=CH_2$$

comme composé organique (1).

**6.** Procédé suivant la revendication 4, caractérisé en ce que l'on utilise

$$(CH_2=CHCH_2O)_2CHCH(OCH_2CH=CH_2)_2$$

comme composé organique (2).

**7.** Procédé suivant la revendication 4, caractérisé en ce que l'on utilise comme organopolysiloxane (3) avec, en moyenne, plus d'un atome d'hydrogène à liaison Si par molécule, un composé de formule générale

$$H_dR_{3\text{-}d}SiO(SiR_2O)_o(SiRHO)_pSiR_{3\text{-}d}H_d \qquad \text{(VIII)},$$

où

R représente des radicaux hydrocarbure identiques ou différents, facultativement halogénés, avec 1 à 18 atomes de carbone par radical,
d est identique ou différent et est 0 ou 1,
o représente 0 ou un nombre entier de 1 à 1000 et
p représente 0 ou un nombre entier de 1 à 6.

**8.** Procédé suivant l'une quelconque des revendications 4 à 7, caractérisé en ce que le copolymère de siloxane comportant des radicaux vinyloxy ainsi obtenu est équilibré avec un organopolysiloxane (5) choisi parmi les organopolysiloxanes linéaires, comportant des groupes triorganosiloxy terminaux, les organopolysiloxanes linéaires, comportant des groupes hydroxyle terminaux, les organopolysiloxanes cycliques et les copolymères d'unités diorganosiloxane et monoorganosiloxane.

**9.** Utilisation des copolymères de siloxane comportant des groupes vinyloxy suivant la revendication 1, 2 ou 3, dans des compositions réticulables par la lumière à base des copolyméres de siloxane donnés précédemment.

**10.** Utilisation des copolyméres de siloxane comportant des groupes vinyloxy suivant la revendication 1, 2 ou 3, dans la préparation d'enduits réticulables par la lumière.